# EUROPEAN PATENT APPLICATION

(11) **EP 3 547 010 A1**
(43) Date of publication of application: **02.10.2019**
(21) Application number: 18195198.9
(22) Date of filing: 18.09.2018
(51) Int. Cl.: G02B 27/64, G02B 7/182, G02B 26/10, G01S 3/781, G01S 3/786, G01S 7/481

(54) **MOVING OBJECT IMAGING APPARATUS AND MOVING OBJECT IMAGING METHOD**

(30) Priority: 29.03.2018 JP 2018063544
(71) Applicant: Hitachi, Ltd., Tokyo 100-8280 (JP)
(72) Inventor: MATSUKA, Daisuke, Chiyoda-ku, Tokyo 100-8280 (JP); MIMURA, Masahiro, Chiyoda-ku, Tokyo 100-8280 (JP); HINO, Kazuhiko, Chiyoda-ku, Tokyo 100-8280 (JP); FUJIMURA, Takayuki, Chiyoda-ku, Tokyo 100-8280 (JP)
(74) Representative: Mewburn Ellis LLP

(57) **Abstract**

Provided is a moving object imaging apparatus including: an imager that captures an image of a moving object; a first housing that has the imager fixed therein; a first reflecting mirror and a second reflecting mirror that are disposed on an optical axis of the imager; a second housing that houses the first reflecting mirror and the second reflecting mirror; a first deflector that is provided in the second housing and deflects the optical axis of the imager by rotating the first reflecting mirror; and a first rotator that rotates the second housing around the optical axis of the imager with respect to the first housing. A rotation axis of the first deflector and a rotation axis of the first rotator are parallel to each other.

## Description

### BACKGROUND OF THE INVENTION

### FIELD OF THE INVENTION

The present invention relates to a moving object imaging apparatus and a moving object imaging method capable of tracking a moving object and capturing an image thereof.

### BACKGROUND ART

In the related art, there are known apparatuses that capture images of moving objects such as vehicles and flying objects moving in a target region. In order to track a moving object in motion and capture an image thereof, it is necessary to control the optical axis of the camera so as to capture the moving object in the imaging range of the camera. As a method for directing the optical axis of the camera to the moving object, there is a known method capable of directing the optical axis of the camera to the moving object by driving a plurality of rotatable movable mirrors with motors having different rotation axes.

This technique is disclosed in, for example, JP-A-H10-136234. In the abstract of the document, the following description is given. "A light transmissive window W1 is provided in a non-light-transmissive housing B1. In addition, in the non-light-transmissive housing B1, an imaging apparatus C1, an azimuth angle rotatable reflecting mirror M1, a tilt angle rotatable reflecting mirror M2, and motors m1 and m2 rotating the mirrors M1 and M2 are disposed. The rays I from the field of view of a subject pass through the window W1, and are then regularly reflected by the mirror M1, and reflected again by the mirror M2. Thereby, an image of the subject returns to an erect image, and the erect image of the subject is incident into the imaging apparatus C1."

There is also a conventional technique using a reflecting mirror for deflection in one direction of the optical axis of the imaging camera and using the operating mechanism part for deflection in a direction perpendicular to the reflecting mirror. In the abstract of JP-A-H10-210246, the following description is given. "A reflecting mirror 10b is formed on the focal plane of a condensing lens 10a of an imaging camera 10 so as to be freely scannable corresponding to the imaging element 10c, and the imaging camera 10 is disposed so as to be freely scannable through the scanning mechanism unit 11. Thereby, in a state where the imaging camera 10 is scanned linearly, the reflecting mirror 10b is subjected to triangular scanning in a direction opposite to the scanning direction of the imaging camera 10 every frame period T of the imaging camera 10. Light waves converged through the condensing lens 10a are guided to the imaging element 10c for each one frame through the reflecting mirror 10b such that a static field-of-view image is acquired. With such a configuration, a desired object is achieved."

### SUMMARY OF THE INVENTION

However, in the imaging apparatus of JP-A-H10-136234, the movable range of the optical axis of the imaging apparatus is limited by the narrow movable range of the mirror. Thus, a problem arises in that the monitoring range thereof is inevitably restricted.

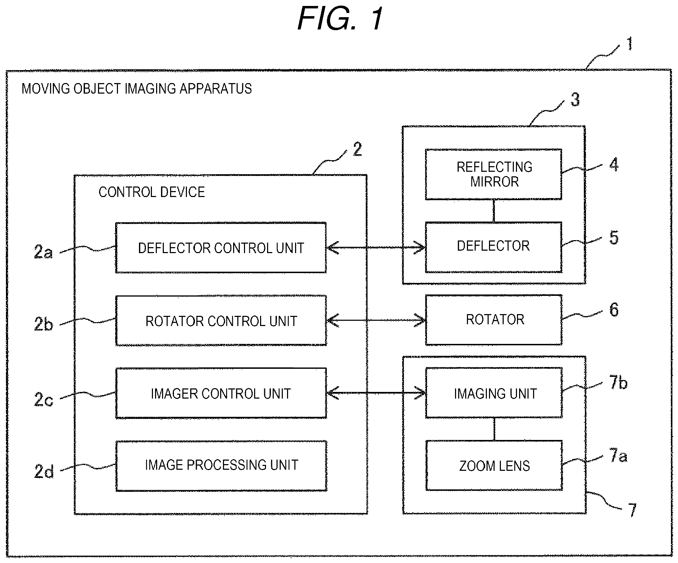

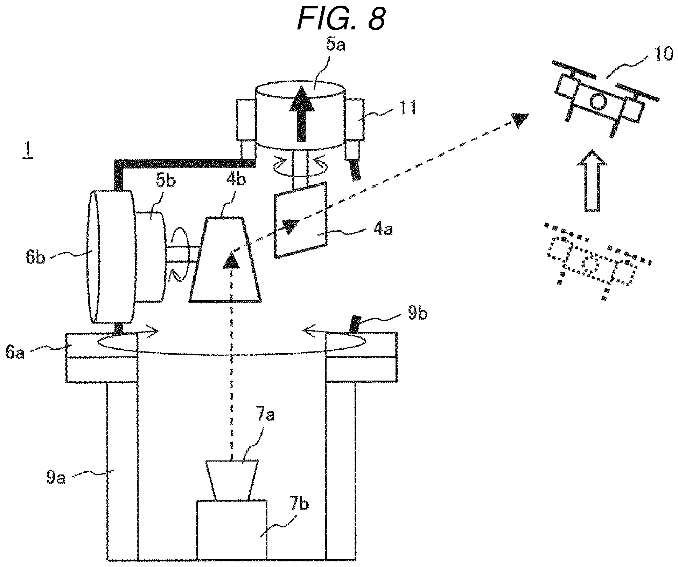

In addition, as can be clearly seen from Figs. 1 and 8 and the like of the same document, the condensing lens and the reflecting mirror are built into the imaging apparatus of JP-A-H10-210246 . As a result, the entire imaging camera, which has become heavier, is configured to be scanned by the scanning mechanism unit. Therefore, there is a problem similar to that of JP-A-H10-136234 in that the practically allowable imaging range is limited in a direction in which the optical axis of the imaging element is moved through rotation of the reflecting mirror. Inaddition, there is also a problem in that the response speed is not favorable due to the structure that the entire imaging camera having a large weight has to be scanned in a direction in which the optical axis of the imaging element is moved through scanning of the scanning mechanism unit.

The present invention has been made in consideration of these problems, and it is an object of the present invention to provide a moving object imaging apparatus and a moving object imaging method capable of expanding a practically allowable imaging range in a direction in which the optical axis of the imaging element is moved through rotation of the reflecting mirror and capable of avoiding response delay caused by scanning the entire imaging camera.

In order to achieve the above object, a moving object imaging apparatus according to an aspect of the present invention includes: an imager that captures an image of a moving object; a first housing that has the imager fixed therein; a first reflecting mirror that is disposed on an optical axis of the imager; a second housing that houses the first refleeting mirror; a first deflector that is provided in the second housing and deflects the optical axis of the imager by rotating the first reflecting mirror; and a first rotator that rotates the second housing around the optical axis of the imager with respect to the first housing. A rotation axis of the first deflector and a rotation axis of the first rotator are the same.

According to another aspect of the present invention, a moving object imaging apparatus includes: an imager that captures an image of a moving object; a first housing that has the imager fixed therein; a first reflecting mirror and a second reflecting mirror that are disposed on an optical axis of the imager; a second housing that houses the first reflecting mirror and the second reflecting mirror; a first deflector that is provided in the second housing and deflects the optical axis of the imager by rotating the first reflecting mirror; and a first rotator that rotates the second housing around the optical axis of the imager with respect to the first housing. A rotation axis of the first deflector and a rotation axis of the first rotator are parallel to each other.

According to the present invention, it is possible to expand a practically allowable imaging range in the direction in which the optical axis of the imaging element is moved through rotation of the reflecting mirror, and it is possible to avoid response delay caused by scanning the entire imaging camera. That is, according to the present invention, it is possible to perform appropriate tracking imaging even for a high-speed moving object moving in a wide monitoring area.

### BRIEF DESCRIPTION OF THE DRAWINGS

Fig. 1 is a diagram illustrating a structure of a moving object imaging apparatus according to Example 1.
Fig. 2 is a block diagram of a moving object imaging apparatus and a moving object according to Example 1.
Fig. 3 is a diagram illustrating an operation flow of a deflector and a rotator according to Example 1.
Fig. 4 is a diagram for explaining processing in an image processor according to Example 1.
Fig. 5 is a diagram illustrating a structure of a moving object imaging apparatus according to Example 2.
Fig. 6 is a diagram illustrating a structure of a moving object imaging apparatus according to Example 3.
Fig. 7 is a diagram illustrating a structure of a moving object imaging apparatus according to Example 4.
Fig. 8 is a diagram illustrating a structure of a moving object imaging apparatus according to Example 5.

### DETAILED DESCRIPTION OF THE INVENTION

Examples of the present invention will be described below with reference to the drawings. In the following description, for the sake of convenience, a configuration of the present invention will be described with reference to a plurality of examples. Unless otherwise specified, the examples do not unrelate to one another. The examples relate to one another such that one example is a part of another example, or a modification example, details, supplementary explanation, or the like of all examples.

### Example 1

A moving object imaging apparatus 1 according to Example 1 of the present invention, which tracks a moving object such as a vehicle or a person moving on a plane and captures an image thereof, will be described with reference to Figs. 1 to 4. Configuration of Moving Object Imaging Apparatus of Present Example

Fig. 1 is a functional block diagram of a moving object imaging apparatus 1 of the present example. As shown here, the moving object imaging apparatus 1 includes a deflection unit 3 that includes a reflecting mirror 4 and a deflector 5, a rotator 6 that rotates the deflection unit 3, an imager 7 that includes a zoom lens 7a and an imaging unit 7b, and a control device 2 that controls them. A galvano motor is used as a power source of the deflector 5, and has angle detection means. As a power source of the rotator 6, a stepping motor or the like capable of observing the rotation angle or the rotation number is used. Further, the imaging unit 7b includes an imaging element such as a CCD image sensor.

The control device 2 includes a deflector control unit 2a that adjusts the deflection angle of the reflecting mirror 4 by controlling the deflector 5, a rotator control unit 2b that adjusts the deflection angle of the deflection unit 3 by controlling the rotator 6, an imager control unit 2c that controls the imager 7, and an image processing unit 2d that performs image processing on image data 8 of an image captured by the imager 7. The functions of the respective units in the control device 2 are realized by loading a program stored in an auxiliary storage device such as a hard disk or the like of the control device 2 on a main storage device such as a semiconductor memory and the like and causing a computing device such as a CPU to execute the program. However, in the following description, such well-known operations will be appropriately omitted, and description thereof will be given.

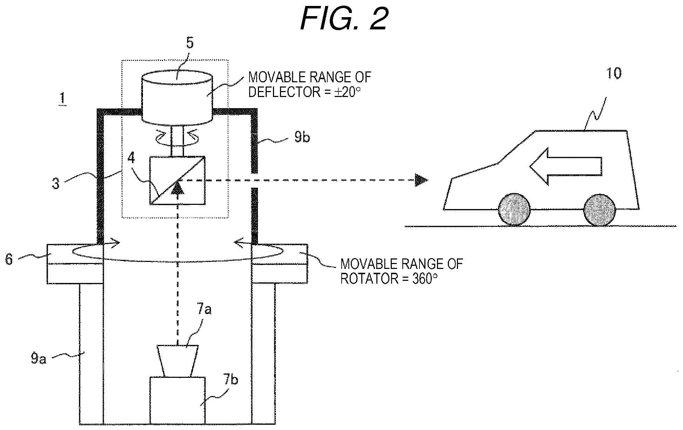

Fig. 2 is a schematic diagram of a moving object imaging apparatus 1 that tracks a vehicle (moving object 10), which is traveling, and captures an image thereof. As shown here, in a housing 9a of the moving object imaging apparatus 1, an imager 7 is fixed. The imager 7 has a zoom lens 7a having a relatively heavy weight among constituent elements of the moving object imaging apparatus 1. The rotator 6 having a movable range of 360° is provided on the upper part of the housing 9a so as to adjust the deflection angle of the deflection unit 3 placed on the rotator 6. It is assumed that the deflection unit 3 is lighter than the imaging unit 7. Further, a deflector 5 is provided on the upper part of the housing 9b of the deflection unit 3 so as to adjust the deflection angle of the reflecting mirror 4 which is relatively light in weight.

As shown in Fig. 2, in the moving object imaging apparatus 1 of the present example, both rotation axes of the deflector 5 and the rotator 6 are disposed so as to be coaxial with the optical axis of the imager 7 indicated by the dashed line arrow. Thus, the control device 2 appropriately controls the deflection angle of the deflector 5 and the rotator 6 such that the optical axis of the imager 7 is consistently directed to the moving object 10. With such a configuration, the moving object 10 can be tracked and the image thereof can be captured.

Here, the deflector 5 rotates the relatively light reflecting mirror 4 at a high speed with a small deflection angle unit, such that the moving object 10 can be quickly tracked within a limited movable range (for example, ±20°). This configuration provides quick positioning performance (for example, about 1 m seconds) . As described above, the deflector 5 finely and quickly adjusts the deflection angle of the reflecting mirror 4. Thus, the deflector 5 may be referred to as a fine movement mechanism, and control of the deflection angle performed by the deflector 5 may be referred to as fine control.

On the other hand, the rotator 6 relatively slowly rotates the relatively heavy deflection unit 3 with a large deflection angle unit. This configuration provides performance of rotating 360° in several seconds, for example. As described above, the movable range of the deflector 5 is limited. Thus, in the deflector 5 alone, it is difficult to orient the reflecting mirror 4 inside the deflection unit 3 in any direction. However, by using the rotator 6 capable of 360° rotation in combination with the deflector 5, it is possible to orient the reflecting mirror 4 in an optional direction and to orient the optical axis of the imager 7 in an optional direction. As described above, the rotator 6 is capable of adjusting the deflection angle of the deflection unit 3 roughly and relatively slowly. Thus, the rotator 6 may be referred to as a coarse moving mechanism, and control of the deflection angle performed by the rotator 6 may be referred to as coarse movement control.

For example, the imager 7 has performance of exposure time of several milliseconds and imaging cycle of 30 fps. Thus, by stopping both the deflector 5 and the rotator 6 during the exposure time necessary for imaging of the image data 8, it is possible to prevent blurring in the image data 8. Tracking Imaging Method of Moving Object with Moving Object Imaging Apparatus of Present Example

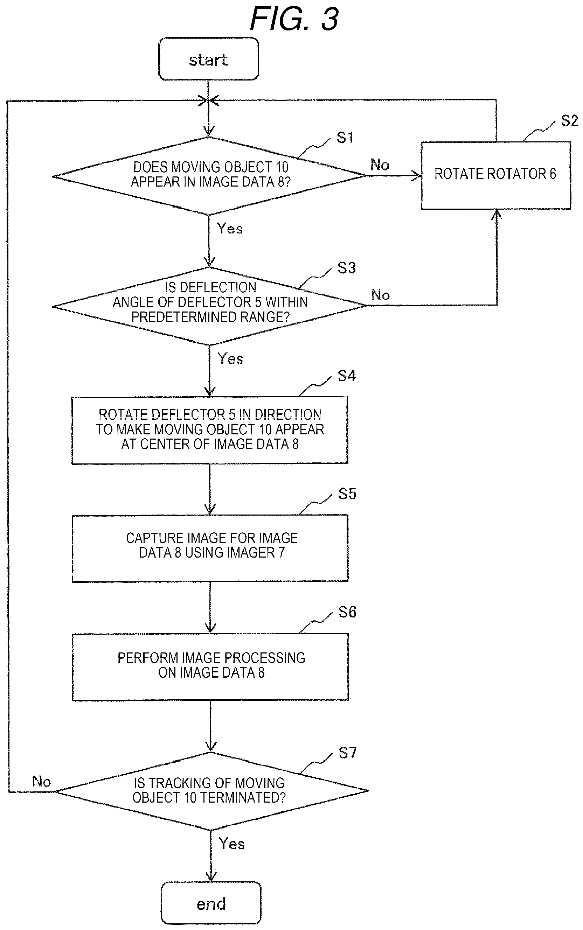

Fig. 3 is a flowchart illustrating an example of an imaging method in which the moving object imaging apparatus 1 according to the present example tracks the moving object 10 and captures an image thereof. In the following description, it is assumed that there is only one moving object 10 as a monitoring target. However, by combining the tracking imaging method described below with control of sequentially switching the moving object 10 as a monitoring target, a plurality of monitoring targets may be tracked and images thereof may be captured.

As shown in Fig. 3, in a case where the control device 2 starts the tracking imaging control of the moving object 10, the image processing unit 2d determines whether the moving object 10 as a tracking target appears in the image data 8 of the image recently captured by the imager 7 (S1).

If it is determined in S1 that the moving object 10 in the image data 8 does not appear, the rotator control unit 2b rotates the rotator 6 by a predetermined amount in a predetermined direction (for example, by 10° in the right direction) (S2: coarse movement control), and then the process returns to S1. As a result, the processes of S1 and S2 are repeated until the moving object 10 appears in the image data 8, and the rotation of the rotator 6 is stopped at the position where the image of the moving object 10 can be captured. In the moving object imaging apparatus 1 of the present example, the imager 7 with a heavy weight is fixed inside the housing 9a, and the rotator 6 only needs to rotate the relatively light deflection unit 3. Therefore, the rotator 6 is able to check presence or absence of the moving object 10 around 360° in a short time of several seconds if necessary. It should be noted that in a case where the moving object 10 cannot be detected even after the checking is performed around 360 ° , the processing in Fig. 3 may be stopped, or the rotator 6 may continue to rotate at a low speed until the moving object 10 enters into an imaging range.

On the other hand, if it is determined in S1 that the moving object 10 appears in the image data 8, the deflector control unit 2a determines whether the deflection angle of the deflector 5 is within a predetermined range (for example, ±10°) (S3). The process of S3 is for checking whether the current deflection angle of the deflector 5 has a margin with respect to the movable range (for example, ±20°).

In S3, it may be determined that the deflection angle of the deflector 5 is not within the predetermined range, that is, it may be determined that the current deflection angle of the deflector 5 is close to the limit of the movable range and the room for rotation is further small. In this case, the rotator control unit 2b rotates the deflection unit 3 through the rotator 6 in a direction in which an image of the moving object 10 can be captured in the vicinity of the neutral position (0°) for the deflection angle of the deflector 5 (S2) . Then, the process returns to S1. As a result, the image of the moving object 10 is captured in the vicinity of the deflection angle of 0° of the deflector 5. Thus, it is possible to reset the left and right range where the deflector 5 having a fast response speed is able to track the moving object 10 at a high speed.

In contrast, in S3, it may be determined that the deflection angle of the deflector 5 is within the predetermined range, that is, it may be determined that the current deflection angle of the deflector 5 is within the middle portion of the movable range and the room for rotation to the left and right is larger (for example, the angle is within a range of ±10°). In this case, the deflector control unit 2a rotates the reflecting mirror 4 through the deflector 5 in a direction in which the moving object 10 appears at the center of the image data 8 (S4: fine control). Then, during the predetermined exposure time, the reflecting mirror 4 is stopped, and the imager control unit 2c controls the imager 7 so as to capture the image of the image data 8 in a state where the moving object 10 appears at the center (S5) . Thereafter, the image processing unit 2d performs a desired process on the captured image data 8 (S6) .

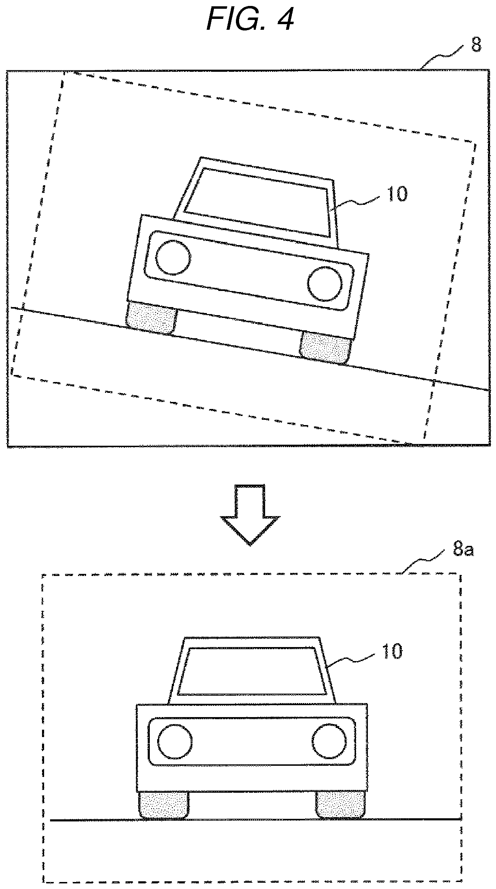

Fig. 4 shows an example of image processing performed by the image processing unit 2d. In a case where the deflection angle of the reflecting mirror 4 is rotated from the neutral position such that the moving object 10 appears at the center of the image data 8, as shown in Fig. 4, the moving object 10 of the captured image data 8 becomes inclined. Therefore, the image processing unit 2d extracts a region indicated by the dotted line with reference to the actual horizontal direction, and outputs the region as the processed image data 8a to the outside. The external apparatus that has received this can execute further image processing on the processed image data 8a after a process such as reading of the license plate performed in a case where the moving object 10 is a vehicle or face recognition performed in a case where the moving object 10 is a person.

In a case where the process of S6 of Fig. 3 is completed, it is determined whether to end the tracking imaging of the moving object 10 . If the tracking imaging is ended, the process in Fig. 3 is completed, and if not, the process returns to S1, and the process in Fig. 3 is repeated until end instruction is issued.

As described above, in the moving object imaging apparatus 1 of the present example, the imager 7 is provided inside the fixed side housing 9a, and the fine movement mechanism (deflector 5) of the reflecting mirror 4 having a narrow movable range and the coarse movement mechanism (rotator 6) of the reflecting mirror 4 having a wide movable range are provided to be coaxial with the optical axis of the imager 7 . With such a configuration, in the moving object imaging apparatus 1 of the present example, as compared with the conventional structure, it is possible to expand the movable range of the reflecting mirror 4. In addition, it is unnecessary to rotate the relatively heavy imager 7 among the constituent elements of the moving object imaging apparatus 1 when the reflecting mirror 4 is oriented in an optional direction. Therefore, it is possible to improve the response speed and the accuracy of both the fine control performed by the fine movement mechanism and the coarse movement control performed by the coarse movement mechanism.

### Example 2

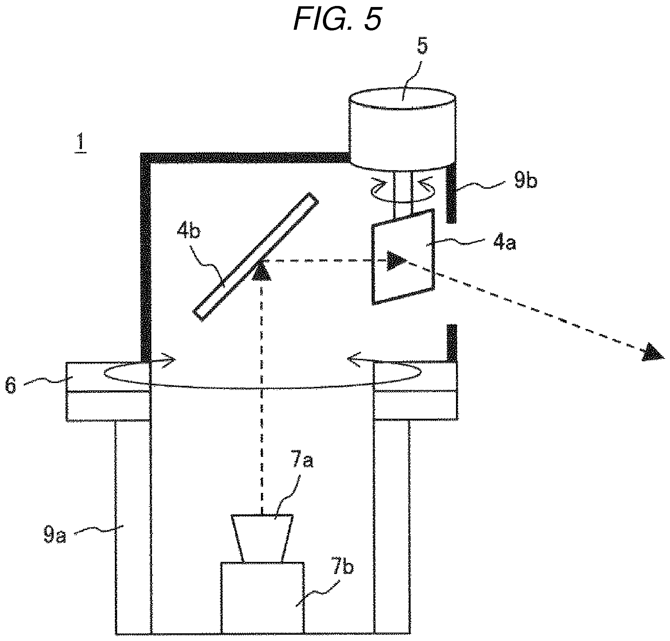

Next, with reference to Fig. 5, the moving object imaging apparatus 1 of Example 2, which is a modification example of Example 1, will be described. It should be noted that redundant description of commonalities with Example 1 will be omitted.

In Example 1, as shown in Fig. 2, the deflector 5 and the rotator 6 are disposed such that the rotation axes of the deflector 5 and the rotator 6 coincide with the optical axis of the imager 7. However, in the present example, as shown in Fig. 5, the deflector 5 and the rotator 6 are disposed such that the rotation axis of the rotator 6 coincides with the optical axis of the imager 7 and the rotation axes of the deflector 5 and the rotator 6 are parallel to each other. In addition, a reflecting mirror 4a rotatably driven by the deflector 5 and a fixed reflecting mirror 4b are provided in the deflection unit 3.

In such a manner, by imaging the moving object 10 through the rotatable reflecting mirror 4a and the fixed reflecting mirror 4b, even in a case where the rotation axes of the deflector 5 and the rotator 6 are not coaxial, the moving object 10 can be tracked and the image thereof can be captured.

The moving object imaging apparatus 1 of the present example described above has the same effect as that of Example 1. In addition, the reflecting mirror 4a and the reflecting mirror 4b share the function of the reflecting mirror 4 of Example 1. Therefore, it is possible to reduce the weight of the reflecting mirror 4b, which is the rotational load of the deflector 5. As a result, it is possible to further enhance the performance of tracking the moving object 10 by driving the deflector 5. In addition, since the restriction on the installation position of the deflector 5 is relaxed, the design freedom of the deflection unit 3 can be further enhanced.

### Example 3

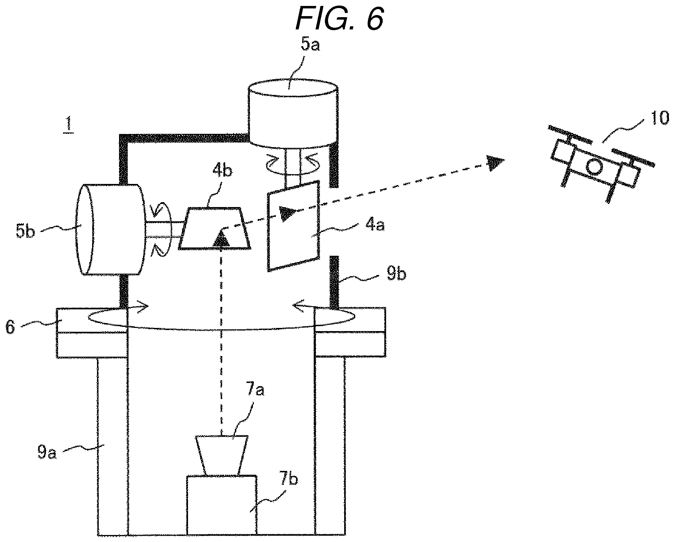

Next, with reference to Fig. 6, a moving object imaging apparatus 1 according to Example 3 of the present invention will be described. It should be noted that redundant description of commonalities with the above examples is omitted.

The moving object imaging apparatus 1 according to Example 1 and Example 2 is an imaging apparatus that tracks the moving object 10, such as a vehicle or a person moving on a plane, and that captures an image thereof. However, the moving object imaging apparatus 1 according to the present example is an imaging apparatus that tracks a moving object 10, such as a drone which freely flies over a three-dimensional space, and that captures an image thereof.

Therefore, in the moving object imaging apparatus 1 of the present example, the deflection unit 3 has a deflector 5a having the rotation axis parallel to the rotation axis of the rotator 6 and a deflector 5b having the rotation axis perpendicular to the rotation axis of the rotator 6. Thereby, the deflection angles of the reflecting mirrors 4a and 4b could be separately adjusted by the respective deflectors 5a and 5b.

Also in the case of the configuration of the present example, the moving object imaging apparatus 1 does not need to rotate the heaviest imager 7 among the constituent elements of the moving object imaging apparatus 1 when the reflecting mirrors 4a and 4b are oriented in an optional direction. Thus, as compared with the conventional structure in which the imager is provided on the rotating side of the moving object imaging apparatus, it is possible to improve the response speed and the accuracy of each of the fine control and the coarse movement control.

### Example 4

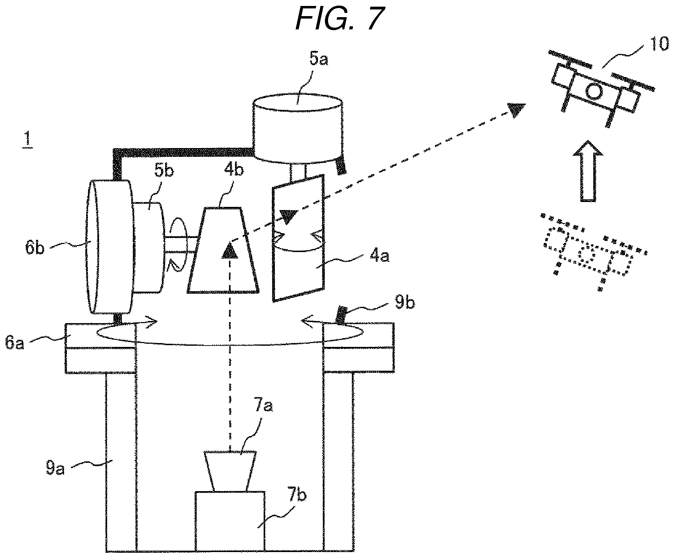

Next, with reference to Fig. 7, a moving object imaging apparatus 1 according to Example 4, which is a modification example of Example 3, will be described. It should be noted that redundant description of commonalities with the above examples is omitted.

In Example 3, as shown in Fig. 6, a fine movement mechanism (deflector 5a) and a coarse movement mechanism (rotator 6) are provided with respect to a rotation axis parallel to the optical axis of the imager 7. With respect to the rotation axis perpendicular to the optical axis of the imager 7, only the fine movement mechanism (deflector 5b) is provided.

As described in Example 1, the fine movement mechanism (deflector 5b) has a limited movable range. Thus, in the configuration of Example 3, only the fine movement mechanism (deflector 5b) tracks the movement of the moving object 10 in the vertical direction. In a case where the moving object 10 moves to a high altitude (or a low altitude close to the ground), the moving object 10 may not be tracked and an image thereof may not be captured in some cases.

Therefore, in the present example, in order to expand the movable range of the reflecting mirror 4b, a fine movement mechanism (deflector 5b) having a narrow movable range and a coarse movement mechanism (rotator 6b) having a wide movable range are provided with respect to the rotation axis perpendicular to the optical axis of the imager 7. By the cooperation of the mechanisms, the movable range in the elevation angle direction or the depression angle direction of the optical axis of the imager 7 can be greatly expanded. As a result, the trackable range of the moving object 10 in the vertical direction can be expanded. In a case of adopting the configuration of the present example, the following condition is necessary. The longitudinal length of the reflecting mirror 4a close to the moving object 10 is made longer than that of Example 3, and the longitudinal length of the opening of the deflection unit 3 is also made longer than that of Example 3. The reason for this is that, in order to expand the movable range of the optical axis of the imager 7 toward the reflecting mirror 4a in accordance with expansion of the range of rotation of the reflecting mirror 4b, it is necessary to lengthen the longitudinal length of the reflecting mirror 4a correspondingly.

As in the present example, two sets of the fine movement mechanism and the coarse movement mechanism may be provided. In this case, if the mechanisms alternately execute the control illustrated in Fig. 3 of Example 1, the moving object 10 can be tracked in both the horizontal direction and the vertical direction, and an image thereof can be captured.

According to the configuration of the present example described above, in addition to the same effect as that of Example 3, it is possible to obtain the effect capable of more widely tracking the movement of the moving object 10 in the vertical direction and capturing an image thereof.

### Example 5

Next, with reference to Fig. 8, a moving object imaging apparatus 1 of Example 5, which is a modification example of Example 4, will be described. It should be noted that redundant description of commonalities with the above examples is omitted.

In Example 4, even when the optical axis of the imager 7 largely varies in the elevation angle direction or the depression angle direction in accordance with the rotation of the reflecting mirror 4b, it is necessary to lengthen the length in the longitudinal direction of the reflecting mirror 4a such that the optical axis is projected on the reflecting mirror 4a. However, there is a problem that an increase in size (weight) of the reflecting mirror 4a, which is the rotational load of the deflector 5a, causes deterioration in response speed of the deflector 5a.

In the present example, the size of the reflecting mirror 4a is maintained, such that it is possible to cope with expansion of the movable range of the reflecting mirror 4b. That is, by adding the deflector moving mechanism 11 that moves the deflector 5a up and down in conjunction with the deflection angle of the reflecting mirror 4b, even in a case where a comparatively small reflecting mirror 4a is used, the optical axis of the imager 7 is projected to an appropriate position on the reflecting mirror 4a.

Fig. 8 shows the following state. When the moving object 10 rises from a position indicated by the dotted line to a position indicated by the solid line, the reflecting mirror 4b rotates in a direction to be close to the vertical direction, and the deflector 5a is moved upward by the deflector moving mechanism 11.

According to the configuration of the present example described above, the same effect as the configuration of Example 4 can be obtained. In addition, the tracking performance against the movement in the lateral direction of the moving object 10 can be improved as compared with the configuration of Example 4.

It should be noted that the present invention is not limited to the above-mentioned examples, but includes various modification examples. For example, the above-mentioned examples have been described in detail in order to explain the present invention in an easy-to-understand manner, and are not necessarily limited to those having all the configurations described. Further, a part of the configuration of one example may be replaced by the configuration of another example, and the configuration of one example may be added to the configuration of another example. Further, in the configuration of each example, addition of another configuration, deletion, and replacement may be possible.

## Claims

1. A moving object imaging apparatus comprising:
an imager that captures an image of a moving object;
a first housing that has the imager fixed therein;
a first reflecting mirror that is disposed on an optical axis of the imager;
a second housing that houses the first reflecting mirror;
a first deflector that is provided in the second housing and deflects the optical axis of the imager by rotating the first reflecting mirror; and
a first rotator that rotates the second housing around the optical axis of the imager with respect to the first housing,
wherein a rotation axis of the first deflector and a rotation axis of the first rotator are the same.

2. A moving object imaging apparatus comprising:
an imager that captures an image of a moving object;
a first housing that has the imager fixed therein;
a first reflecting mirror and a second reflecting mirror that are disposed on an optical axis of the imager;
a second housing that houses the first reflecting mirror and the second reflecting mirror;
a first deflector that is provided in the second housing and deflects the optical axis of the imager by rotating the first reflecting mirror; and
a first rotator that rotates the second housing around the optical axis of the imager with respect to the first housing,
wherein a rotation axis of the first deflector and a rotation axis of the first rotator are parallel to each other.

3. The moving object imaging apparatus according to claim 2, further comprising a second deflector that is provided in the second housing and deflects the optical axis of the imager by rotating the second reflecting mirror.

4. The moving object imaging apparatus according to claim 3, further comprising a second rotator that is provided in the second housing and rotates the second deflector around the rotation axis of the second deflector.

5. The moving object imaging apparatus according to claim 4, further comprising a moving mechanism that moves the first deflector in parallel with the rotation axis of the first deflector.

6. The moving object imaging apparatus according to any one of claims 1 to 4, wherein the reflecting mirror is stationary in a case of capturing the image of the moving object.

7. The moving object imaging apparatus according to any one of claims 1 to 4, further comprising an image processing unit that applies a rotation process to image data of an image captured by the imager.

8. The moving object imaging apparatus according to any one of claims 1 to 4, wherein the deflector has a higher response speed and a narrower movable range than the rotator.

9. A moving object imaging method that is a method of controlling a moving object imaging apparatus including an imager that captures an image of a moving object, a first housing that has the imager fixed therein, a reflecting mirror that is disposed on an optical axis of the imager, a second housing that houses the reflecting mirror, a deflector that is provided in the second housing and deflects the optical axis of the imager by rotating the reflecting mirror, and a rotator that rotates the second housing around the optical axis of the imager with respect to the first housing, the method comprising:
controlling the rotator such that the moving object appears in image data of an image captured by the imager; and
controlling the deflector such that the moving object appears at substantially the center of the image data.
